# EUROPÄISCHE PATENTSCHRIFT

(11) **EP 1 119 509 B1**
(45) Veröffentlichungstag und Bekanntmachung des Hinweises auf die Patenterteilung: **24.11.2004**
(21) Anmeldenummer: 00962174.9
(22) Anmeldetag: 29.07.2000
(51) Int. Cl.: B65G 47/54, B65G 47/53, B65G 47/52, B65G 47/74

(54) **VORRICHTUNG ZUM UMSETZEN VON TRANSPORTGÜTERN VON EINER FÖRDEREINRICHTUNG AUF MINDESTENS EINE ANDERE FÖRDEREINRICHTUNG**
DEVICE FOR TRANSPORTING GOODS FROM ONE CONVEYOR DEVICE TO AT LEAST ONE OTHER CONVEYOR DEVICE
DISPOSITIF POUR TRANSFERER DES MARCHANDISES TRANSPORTEES, D'UN CONVOYEUR SUR AU MOINS UN AUTRE CONVOYEUR

(30) Priorität: 06.08.1999 DE 19937143; 29.07.2000 DE 10037054
(43) Veröffentlichungstag der Anmeldung: 01.08.2001
(73) Patentinhaber: Rieg, Wolfgang, 71404 Korb (DE); Lang, Claus, 73660 Urbach (DE)
(72) Erfinder: Rieg, Wolfgang, 71404 Korb (DE); Lang, Claus, 73660 Urbach (DE)
(74) Vertreter: Kratzsch, Volkhard, Dipl.-Ing.
(86) Internationale Anmeldenummer: PCT/DE2000/002513
(87) Internationale Veröffentlichungsnummer: WO 2001/010755

(56) Entgegenhaltungen:
- DE-A- 3 539 723
- US-A- 1 671 534
- US-A- 1 931 628
- US-A- 4 010 843
- US-A- 5 238 100

## Beschreibung

Die Erfindung betrifft eine Vorrichtung zum Umsetzen von Transportgütern nach dem Oberbegriff der Ansprüche 1, 2, 3 und 4 .

Nach dem Stand der Technik sind die unterschiedlichsten Vorrichtungen zur Verbringung eines Transportgutes von einer Fördereinrichtung auf eine andere Fördereinrichtung siehe z.B. das Dokument DE-A-353'9723, wie z.B. Kettenausschleuser, Riemenumsetzer, Flachriemenumsetzer, Schwenkabweiser, Abschieber etc. bekannt. Die DE 89 03 730 U1 beschreibt eine Vorrichtung mit der Güter mittels einer Greifervorrichtung erfasst und dann umgesetzt werden. Vorrichtungen dieser Art sind z.B. in der Getränkeindustrie im Einsatz um Flaschen in bestimmten Gebinden zu verpacken. Die US 5 220 995 beschreibt eine Einschleusvorrichtung für die Proportionierung bestimmter Fördergüter, wobei das Fördergut mittels sich relativ zum Fördergurt bewegenden Förderern, wie z.B. Riemen- oder Gurtförderer auf eine Hauptförderstrecke eingeschleust und ausgerichtet werden. Die US 4 962 841 beschreibt eine Vorrichtung zum Umsetzen von Fördergütern von einer Förderstrecke auf eine z.B. im Winkel von 90° zur ursprünglichen Förderstrecke angeordnete Förderstrecke. Der Antrieb der Umsetzvorrichtung und der Tragrollen erfolgt mittels einer zentral angetriebenen Königswelle und Transmissions-Rundriemen. Bei diesen Vorrichtungen besteht das Problem. daß eine Relativbewegung eines Transportmediums (Flachriemen. Rundriemen) zum Fördergut stattfindet, so daß ein schwer kontrollierbares Verdrehen des Transportgutes möglich ist. Das Fördergut läßt sich während des Verbringungsverlaufes nicht definiert positionieren. Dies ist häufig die Ursache für auftretende Störungen im Materialfluß von Fördereinrichtungen. Bei diesen Vorrichtungen ist es auch sehr schwierig unterschiedliche Fördergütern bezüglich Größe, Gewicht, Gestalt (Kartonagen, Behälter etc.) zu bewegen oder auch einen Mischbetrieb unterschiedlich dimensionierter Fördergüter zu fahren. Ein weiteres Problem besteht bei aktuell im Einsatz befindlichen Vorrichtungen, wenn das Fördergut, wie z.B. ein Kunststoffbehälter oder ein Karton einseitig beladen ist. In diesem Fall kommt es beim Ausschleus- bzw. Verbringungsprozeß häufig zu Crashsituationen. Zudem ist die Beförderung eines Fördergutes meist nur in eine Richtung möglich und nur von einer Fördereinrichtung auf maximal eine parallele, rechtwinklig oder.schräg verlaufende Fördereinrichtung.

Der Erfindung liegt daher die Aufgabe zugrunde eine Vorrichtung zum Umsetzen von Transportgütern unterschiedlicher Größe (Breite, Länge, Höhe), Gewicht, Form und Beladungszustand von einer Fördereinrichtung auf mindestens eine parallele oder in einem bestimmten Winkel zur Fördereinrichtung angeordnete zweite Fördereinrichtung zu schaffen und dabei ein Umsetzen mit genauer Positioniermöglichkeit d.h. ohne Friktion oder Verrutschen des Transportgutes zu ermöglichen. Die Erfindung soll ermöglichen, daß ein Umsetzen von Transportgütern nicht nur in einer Richtung ermöglicht wird, sondern daß wahlweise in mindestens zwei Richtungen von einer Fördereinrichtung auf andere parallel oder in einem bestimmten Winkel zur Fördereinrichtung angeordnete weitere Fördereinrichtungen umgesetzt werden kann. Die Erfindung soll in Fördereinrichtungen der unterschiedlichsten Art integriert werden können, insbesondere soll eine Verwendung in Kombination mit Rollenförderern mit sehr enger Rollenteilung und eine nachträgliche Umrüstungen bestehender Anlagen möglich sein. Die Erfindung soll ermöglichen, daß auch Fördergüter mit hohen Gewichten, wie z.B. Europaletten unter Verwendung kostengünstigster Technologien und Gewährleistung höchst möglichster Betriebssicherheit bei geringst möglichem Verschleiß umgesetzt werden können. Eine Verwendung der Vorrichtung im Lebensmittelbereich oder in Ex-geschützten Räumen muß ebenfalls möglich sein.

Diese Aufgabe wird erfindungsgemäß durch die kennzeichnenden Merkmale der Ansprüche 1, 2, 3 und 4 gelöst. Die weitere Ausgestaltung der Erfindung ist in den Unteransprüchen 5 bis 23 aufgeführt.

Durch die Erfindung wird erreicht, daß Transportgüter unterschiedlicher Größe. Gewicht und Form, die auch im Mischbetrieb auf Fördereinrichtungen bewegt werden von einer Fördereinrichtung auf mindestens eine andere Fördereinrichtung umgesetzt werden können und dabei keine Friktion und kein Verrutschen der Fördergüter während des Umsetzvorganges stattfindet. Die Erfindung ermöglicht auch das problemlose Umsetzen von z.B. einseitigen beladenen Fördergütern, d.h. der Beladungszustand des Fördergutes spielt keine Rolle. Durch die Erfindung wird eine genaue Positioniermöglichkeit der unterschiedlichen Fördergüter beim Umsetzprozeß erreicht. Die Erfindung ermöglicht eine Verwendung der Umsetzvorrichtung in Verbindung mit Fördereinrichtungen der unterschiedlichsten Art, insbesondere in Verbindung mit Rollenförderern mit sehr enger Rollenteilung und die Nachrüstung der Umsetzvorrichtung an bestehenden Fördereinrichtungen, insbesondere bei Rollenförderern. Desweiteren wird mit der Vorrichtung erreicht, daß in mindestens zwei verschiedene Richtungen umgesetzt werden kann und daß auf mehrere parallele oder in einem bestimmten Winkel zur Fördereinrichtung angeordnete weitere Fördereinrichtungen umgesetzt werden kann und daß die Lage des Transportgutes bezüglich der Förderrichtung auf der Fördereinrichtung verändert werden kann. Die Vorrichtung ermöglicht auch, daß während des Umsetzprozesses alle an die Vorrichtung angeschlossenen Fördereinrichtungen weiter in Betrieb sein können und keine Beeinflußung des Materialflusses auf der restlichen Förderanlage stattfindet. Dies ist ein wesentlicher Vorteil für die erzielbaren Durchsatzzahlen bei Förderanlagen und trägt wesentlich zur Beurteilung der Wirtschaftlichkeit von Förderanlagen bei. Durch eine Modulbauweise der Vorrichtung wird die Nachrüstung in bestehenden Anlagen der unterschiedlichsten Hersteller ermöglicht. Ein weiterer Vorteil ist die mögliche kompakte und flache Bauform der Vorrichtung. Die Erfindung ermöglicht auch, daß beim Betrieb der Vorrichtung höchstmögliche Betriebssicherheit bei geringst möglichem Verschleiß gewährleistet werden kann und die Vorrichtung im Lebensmittelbereich oder in Ex-geschützten Räumen zum Einsatz kommen kann.

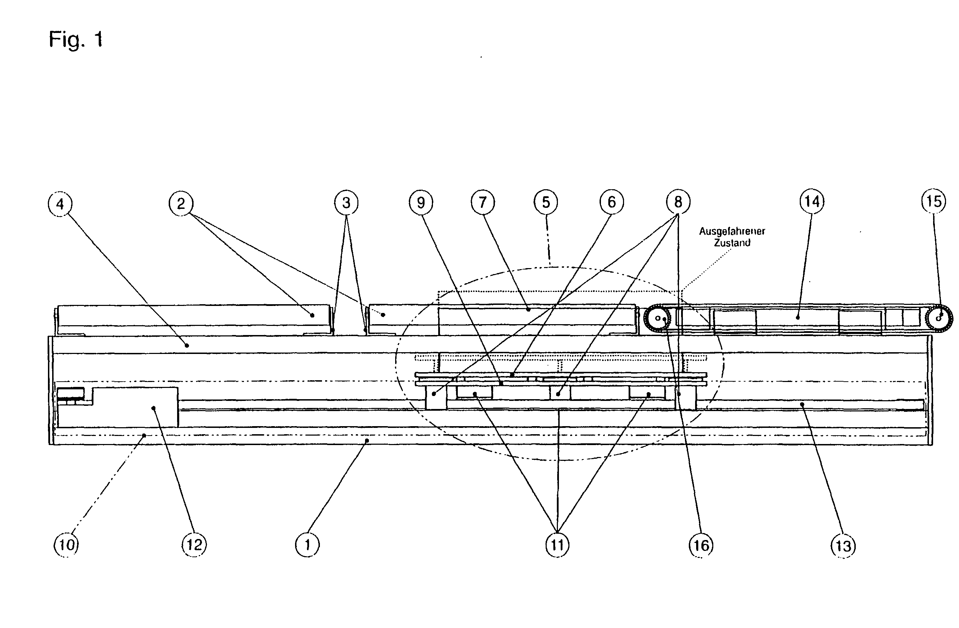

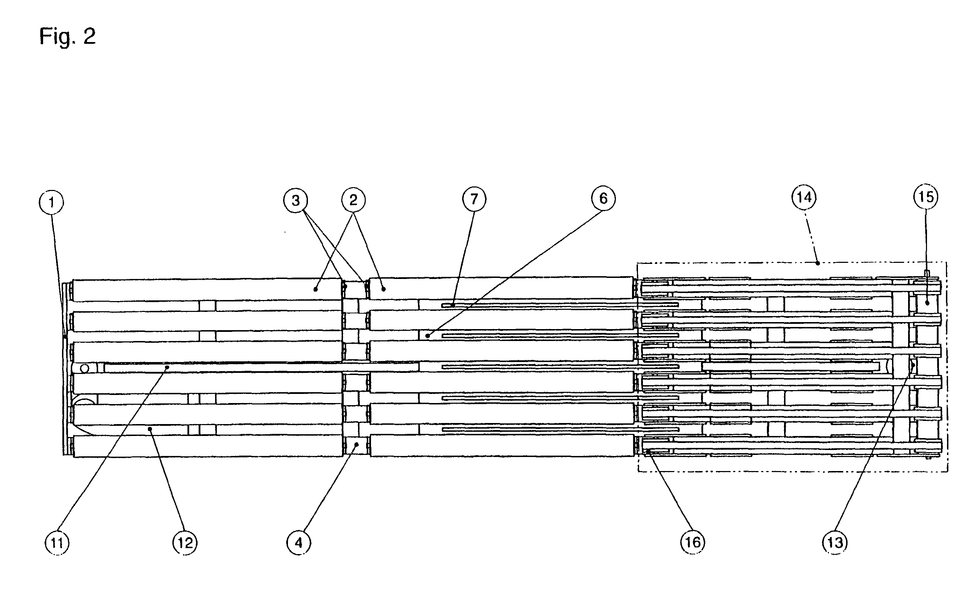

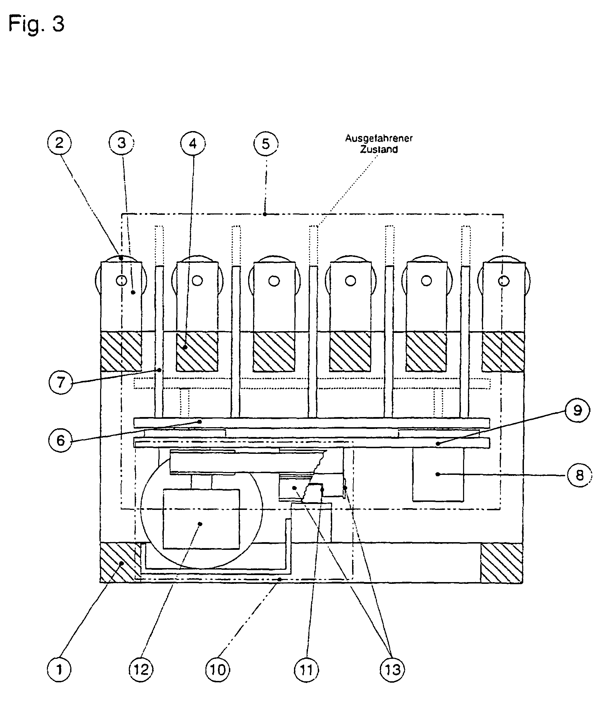

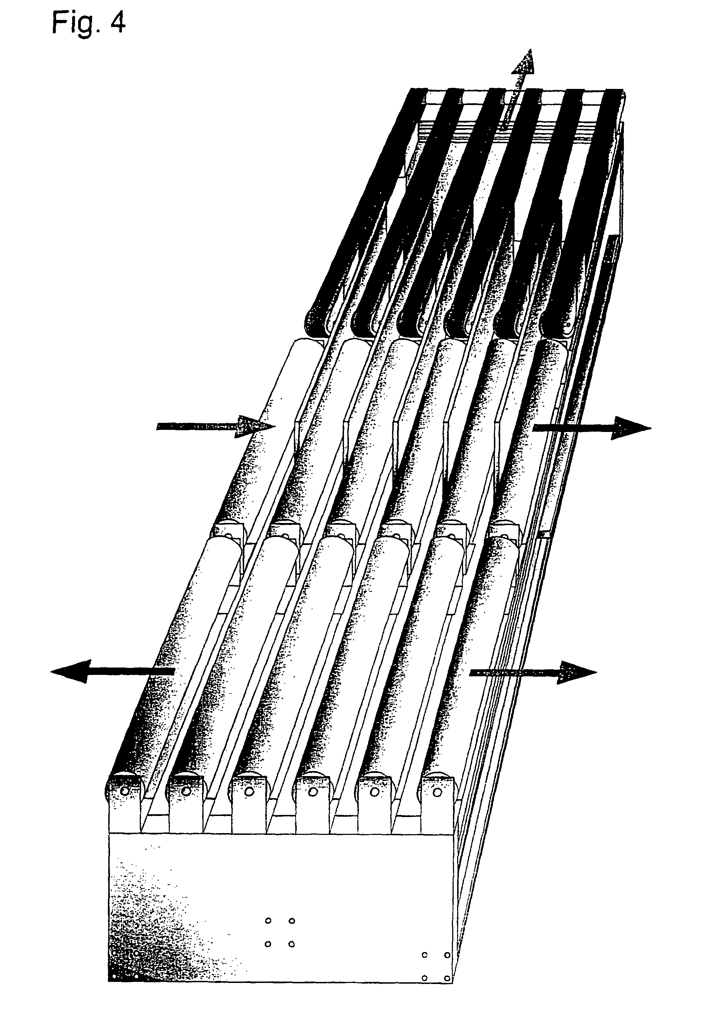

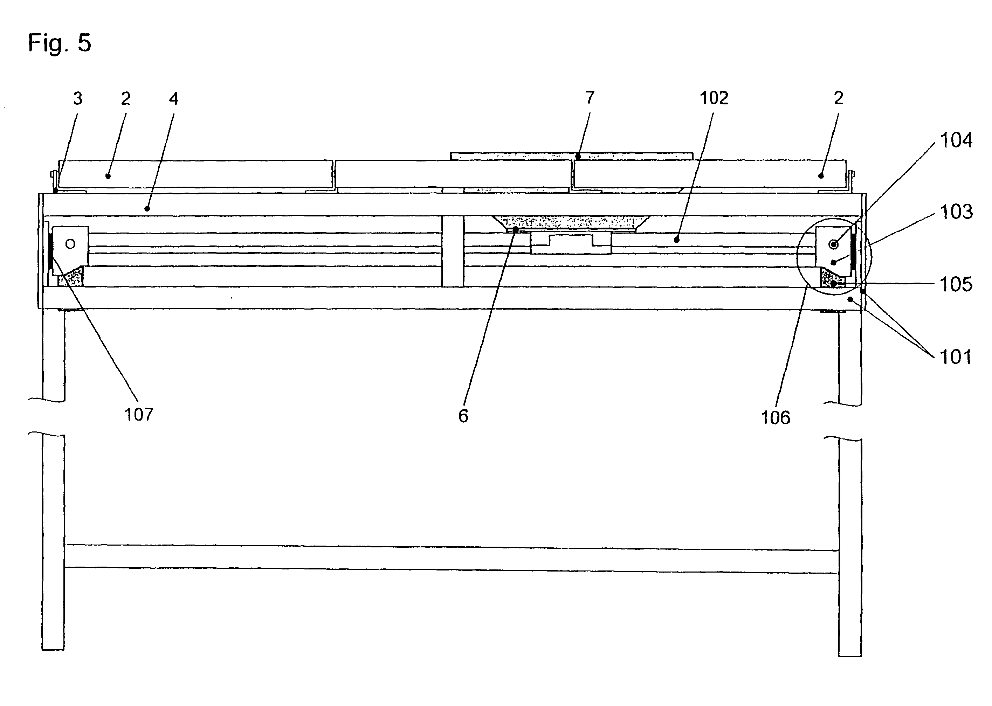

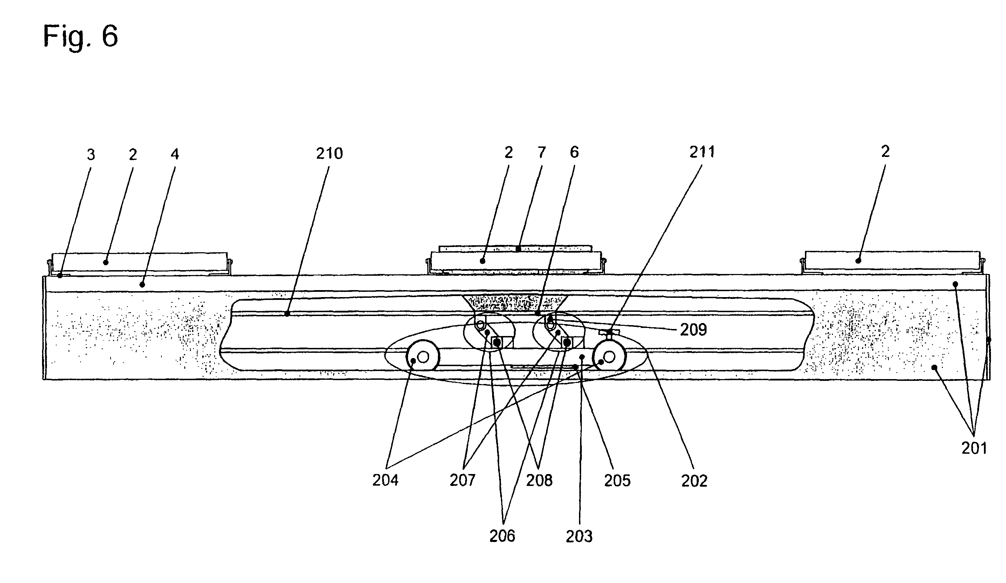

In den Zeichnungen sind Ausführungsbeispiele des Gegenstandes der Erfindung dargestellt. Es zeigt Fig. 1 ein exemplarisches Ausführungsbeispiel in der Vorderansicht.
Es zeigt Fig. 2 das exemplarisches Ausführungsbeispiel aus Fig. 1 in der Draufsicht.
Es zeigt Fig. 3 das exemplarisches Ausführungsbeispiel aus Fig. 1 und 2 in der Seitenansicht. Es zeigt Fig. 4 eine dreidimensionale Ansicht des Ausführungsbeispiels von Fig 1.
Es zeigt Fig. 5 ein exemplarisches Ausführungsbeispiel in der Vorderansicht.
Es zeigt Fig. 6 ein weiteres exemplarisches Ausführungsbeispiel in der Vorderansicht.
Fig. 1 zeigt ein Ausführungsbeispiel, in der Ansicht von vorn, bei dem das Fördergut z.B. von der in der Mitte liegenden Hauptförderstrecke auf die rechts und links von der Hauptförderstrecke liegende Förderstrecken umgesetzt werden kann. Die links von der Hauptförderstrecke angeordnete Förderstrecke ist dabei parallel zur Hauptförderstrecke angeordnet und die rechts von der Hauptförderstrecke angeordnete Förderstrecke transportiert das Fördergut in einem Winkel von 90° zur Hauptförderstrecke ab. Die Vorrichtung verfügt dabei über einen Halterahmen (1) und Querverbinder (4), die das Grundgestell der Vorrichtung bilden. Die Querverbinder (4) sind rechts und links am Halterahmen befestigt und haben eine maximale Breite, die der Breite der Förderrollen (2) entspricht. Die Förderrollen (2) sind mit Aufnahmen (3) auf den Querverbindem (4) montiert. Die Förderrollen (2) verfügen über einen in die Förderrollen (2) integrierten Eigenantrieb, der als Elektromotor mit 24V Betriebsspannung ausgelegt sein kann. Durch diesen Eigenantrieb der Förderrollen (2) ist es möglich den Zwischenraum zwischen Querverbinder (4) / Förderrollen (2) über die gesamte Breite der Vorrichtung frei zu halten, so daß die Aufnahmeelemente (7) nach rechts und links bewegt werden können. Die Förderstrecke rechts von der Förderstrecke, die einen Abtransport des Fördergutes in einem Winkel von 90° zur Hauptförderstrecke ermöglicht ist als rechenförmiger Riemen- oder Flachriemenförderer (14) ausgebildet, der über eine Antriebsrolle (15) mit elektromotorischem Eigenantrieb, der in die Antriebsrolle (15) integriert ist versehen ist und dessen Umlenkrollen (16) maximal die Breite der Förderrollen (2) aufweisen, so daß der Zwischenraum zwischen den einzelnen Riemen/Flachriemen frei ist. Der rechenförmige Riemen- oder Flachriemenförderer (14) ist dabei als Modul konzipiert, welches auf den Querverbindern (4) montiert ist. In die Vorrichtung ist eine Einrichtung zum Längsverfahren (10), die mit dem Halterahmen (1) verbunden ist integriert. Auf der Einrichtung zum Längsverfahren (10) ist eine Hebeeinrichtung (5) montiert und wird von der Einrichtung zum Längsverfahren (10) nach rechts und links bewegt. Die Einrichtung zum Längsverfahren (10) besteht aus einer Linearführung (11) die sich über die gesamte Breite der Vorrichtung erstreckt, einem Antriebsriemen (13) der an einer Stelle mit der Linearführung (11) fest verbunden ist und einem Antriebsmotor (12), der aus raumökonomischen Gründen über einen Transmissionsriemen auf eine Umienkrolle den Antriebsriemen (13) antreibt. Die Hebeeinrichtung (5) ist über die Grundplatte (9) mit der Linearführung (11) fest verbunden. In der Grundplatte (9) sind die Pneumatikzylinder (8) befestigt. In der dargestellten Anordnung bilden die 3 Stück Pneumatikzylinder (8) eine Dreipunktauflage für die nach oben ausfahrbare Aufnahmeplatte (6) auf der die Aufnahmeelemente (7) befestigt sind. Die gestrichelte Linie der Aufnahmeelemente (7) / Aufnahmeplatte (6) stellt den ausgefahrenen Zustand der Hebeeinrichtung (5) dar. Der Umsetzvorgang eines Fördergutes läuft wie folgt ab. Das Fördergut wird auf der Hauptförderstrecke durch die selbst angetriebenen Förderrollen (2) auf Platz gefahren. Die Linearführung (11) hat die Hebeeinrichtung (5) unter das Fördergut gefahren, wobei sich die Aufnahmeelemente (7) in eingefahrenem Zustand befinden. Die Hebeeinrichtung (5) hebt nun die Aufnahmeelemente (7) mittels der Pneumatikzylinder (8) an, so daß das Fördergut von der Hauptförderstrecke abgehoben wird. Der Antriebsmotor (12) treibt nun über den Antriebsriemen (13) die Linearführung (11) an, so daß die Hebeeinrichtung (5) mit dem Fördergut beliebig nach rechts oder links verfahren werden kann, ohne daß das Fördergut verrutscht. Nach dem erfolgten Umsetzen setzt die Hebeeinrichtung (5) das Fördergut auf der gewünschten Position ab und dieses kann weitertransportiert werden. Fig. 2 zeigt das Ausführungsbeispiel aus Fig. 1 in der Draufsicht. In dieser Ansicht ist der Zwischenraum zwischen den Förderrollen (2), die auf den Querverbindern (4) montiert sind und der rechenförmige Riemen- oder Flachriemenförderer (14) der ebenfalls auf den Querverbindern (4) montiert ist zu sehen. Die Aufnahmeelemente (7) die auf der Aufnahmeplatte (6) montiert sind heben das Fördergut von der Förderstrecke ab.
Fig. 3 zeigt das Ausführungsbeispiel aus Fig. 1 in der Seitenansicht von rechts, wobei der Schnittverlauf direkt rechts von der zum Halterahmen (1) gehörenden Seitenteiles erfolgt. In dieser Darstellung ist die mittige Anordnung der Linearführung (11) gut zu erkennen. Der Antriebsriemen (13) ist mit der Linearführung (11) fest verbunden.
Fig. 5 zeigt ein Ausführungsbeispiel, in der Ansicht von vorn, bei dem das Fördergut z.B. von der rechts liegenden Förderstrecke auf die links liegende Förderstrecke umgesetzt werden kann. Die Vorrichtung verfügt über ein Grundgestell (101) in welches die technischen Komponenten der Vorrichtung integriert sind und somit ein echtes Modul bilden. Die Querverbinder (4) sind rechts und links am Grundgestell (101) befestigt und in dieses integriert. Sie haben eine maximale Breite, die der Breite der Förderrollen (2) entspricht. Die Förderrollen (2) sind mit Aufnahmen (3) auf den Querverbindem (4) montiert. Die Förderrollen (2) verfügen über einen in die Förderrollen (2) integrierten Eigenantrieb, der als Elektromotor mit 24 V Betriebsspannung ausgelegt ist. In diesem speziellen Ausführungsbeispiel können die Förderrollen (2) auch über einen seitlich angeordneten Antrieb, der über Keilriemen oder ähnliches auf die Förderrollen wirkt angetrieben werden. Durch diesen Eigenantrieb der Förderrollen (2) ist es möglich den Zwischenraum zwischen Querverbinder (4) / Förderrollen (2) über die gesamte Breite der Vorrichtung frei zu halten, so daß die Aufnahmeelemente (7) nach rechts und links bewegt werden können. Die Aufnahmeelemente (7) sind auf einer Aufnahmeplatte (6) montiert, die wiederum auf einer Einrichtung zum Längsverfahren (102) befestigt ist. Die Einrichtung zum Längsverfahren (102) ist an beiden Enden fest mit Lageraufnahmen (103) verbunden. In den Lageraufnahmen (103) ist eine Welle (104) gelagert. Diese Welle (104) ist mit einem Pneumatikzylinder (105) fest verbunden. Der Pneumatikzylinder wiederum ist mit dem Grundgestell (101) fest verbunden. Ebenfalls an der Lageraufnahme (103) ist eine Vertikalführung (107) befestigt, die aus einem Führungsschuh, der an der Innenseite der Seitenplatten des Grundgestells (101) befestigt ist und einem Führungsblock, der an der Außenseite der Lageraufnahme (103) befestigt ist besteht. Der Führungsblock ist vorbeugend gegen auftretendes Verkanten bei einer ungleichmäßigen Vertikalbewegung in vertikaler Richtung an seiner Außenseite radial geschliffen. Die Einrichtung zum Längsverfahren (102) besteht z.B. aus einer Linearführung mit pneumatischem Eigenantrieb, kann aber genauso gut elektomotorisch mit 24V oder 400 V betrieben sein. Der Umsetzvorgang eines Fördergutes läuft wie folgt ab. Das Fördergut wird auf der Förderstrecke durch die selbst angetriebenen Förderrollen (2) auf Platz gefahren. Die Einrichtung zum Längsverfahren (102) hat die Aufnahmeplatte (6) mit den Aufnahmeelementen (7) unter das Fördergut gefahren, wobei sich die Aufnahmeelemente (7) in eingefahrenem Zustand unter dem Niveau der Rollenoberkante befinden. Die Hebeeinrichtungen (106), die an den Enden der Einrichtung zum Längsverfahren (102) befestigt sind heben nun die gesamte Einheit bestehend aus Einrichtung zum Längsverfahren (102), Aufnahmeplatte (6) und Aufnahmeelemente (7) mittels der Pneumatikzylinder (105) so an, daß das Fördergut von der Förderstrecke abgehoben wird. Der in der Einrichtung zum Längsverfahren (102) integrierte Pneumatikzylinder fördert das Fördergut beliebig von rechts nach links. Nach dem erfolgten Umsetzen setzen die Hebeeinrichtungen (106) das Fördergut auf der gewünschten Position ab und dieses kann weitertransportiert werden. Eine Variante des beschriebenen Ausführungsbeispiels sieht vor, daß die Einrichtung zum Längsverfahren (102) so gestaltet ist, daß der Längsantrieb elektrisch, pneumatisch oder auf eine andere Art vollständig in das Profil der Einrichtung zum Längsverfahren (102) integriert ist, und daß der Antrieb für die Vertilkaibewegung elektrisch, pneumatisch oder auf eine andere Art vollständig in die Lageraufnahmen (103) integriert ist und der Hebevorgang durch außerhalb der gekapselten Einheit, bestehend aus der Einrichtung zum Längsverfahren (102) und den Lageraufnahmen (103) liegende Hebel, die sich am Grundgestell (101) abstützen, bzw. gelagert sind erfolgt, so daß ein Einsatz im Lebensmittelbereich und in Ex-geschützten Räumen möglich ist.
Fig. 6 zeigt ein Ausführungsbeispiel, in der Ansicht von vorn, bei dem das Fördergut z.B. von der rechts liegenden Förderstrecke auf die in der Mitte liegende Förderstrecke oder auf die links liegende Förderstrecke umgesetzt werden kann. Die Vorrichtung verfügt über ein Rahmengestell (201) in welches die technischen Komponenten der Vorrichtung integriert sind und somit ein echtes Modul bilden. Die Querverbinder (4) sind rechts und links am Rahmengestell (201) befestigt und in dieses integriert. Sie haben eine maximale Breite, die der Breite der Förderrollen (2) entspricht. Die Förderrollen (2) sind mit Aufnahmen (3) auf den Querverbindem (4) montiert. Die Förderrollen (2) verfügen über einen in die Förderrollen (2) integrierten Eigenantrieb, der als Elektromotor mit 24 V Betriebsspannung ausgelegt ist. Durch diesen Eigenantrieb der Förderrollen (2) ist es möglich den Zwischenraum zwischen Querverbinder (4) / Förderrollen (2) über die gesamte Breite der Vorrichtung frei zu hatten, so daß die Aufnahmeelemente (7) nach rechts und links bewegt werden können. Die Aufnahmeelemente (7) sind auf einer Aufnahmeplatte (6) befestigt, die wiederum über Hebeeinrichtungen (206) mit dem Fahrwagen (202) verbunden sind. Die Hebeeinrichtungen (206) bestehen aus Hebeln (207) und Wellen (208), wobei die Wellen (208) drehbar am Fahrwagen (202) gelagert sind. In den Fahrwagen (202) ist der für den Betrieb der Hebeeinrichtungen (206) erforderliche Antrieb, z.B. ein Pneumatikzylinder (205) oder ein Elektromotor integriert. Der Pneumatikzylinder ist dabei an seinem freien Ende drehbar am Fahrwagen (202) gelagert. Der Pneumatikzylinder (205) wirkt über eine Druckstange auf die Hebel (207) der Hebeeinrichtungen (206), die die Kraft auf die an der Aufnahmeplatte (6) befestigten Kugelgelenkköpfe (209) weitergeben und somit die Aufnahmeplatte (6) und die Aufnahmeelemente (7) anheben oder senken. Der Fahrwagen (202) besteht aus einem Fahrgestell (203) mit z.B. 4 Laufrädern (204), die über exzentrisch einstellbare Naben mit dem Fahrgestell (203) verbunden sind. Die Laufräder (204) bewegen sich in dem im Rahmengestell (201) intergierten seiltlichen Laufflächen. Zur genauen Führung des Fahrwagens (202) sind Führungsrollen (211) für die Seitenführung einstellbar am Fahrwagen (202) befestigt.
Ein Motor, der im Bereich der Seitenplatten des Rahmengestells (201) innen angebracht ist, treibt über eine Antriebsriemen (210) der partiell mit dem Fahrwagen (202) fest verbunden ist und auf der gegenüberliegenden Seite über eine Umlenkrolle mit Spannstation, die an der Innenseite der Seitenplatten des Rahmengestells (201) angebracht ist geführt wird den Fahrwagen (202) an. Die Führung der notwendigen elektrischen oder pneumatischen Leitungen für den Betrieb der Hebeeinrichtungen (206) erfolgt über eine Schleppkanal.
Der Umsetzvorgang eines Fördergutes läuft wie folgt ab. Das Fördergut wird auf der Förderstrecke durch die selbst angetriebenen Förderrollen (2) auf Platz gefahren. Der Fahrwagen (202) hat die Aufnahmeplatte (6) mit den Aufnahmeelementen (7) unter das Fördergut gefahren, wobei sich die Aufnahmeelemente (7) in eingefahrenem Zustand unter dem Niveau der Rollenoberkante befinden. Die Hebeeinrichtungen heben nun die Aufnahmeplatte (6) mit den Aufnahmeelemente (7) mittels des Pneumatikzylinders (205) und der Hebeeinrichtung (206) so an, daß das Fördergut von der Förderstrecke abgehoben wird. Der Antriebsmotor bewegt nun über den Antriebsriemen (210) den Fahrwagen (202) beliebig z.B. von rechts zur Mitte oder nach links. Nach dem erfolgten Umsetzen setzen die Hebeeinrichtungen (106) das Fördergut auf der gewünschten Position ab und dieses kann weitertransportiert werden. Die Steuerung des Bewegungsablaufes erfolgt über eine in das Modul integrierte Ablaufsteuerung, so daß die Positionen mit höchster Genauigkeit angefahren werden können.

### Bezugszeichenliste:

- 1: Halterahmen
- 2: Förderrolle
- 3: Aufnahme
- 4: Querverbinder
- 5: Hebeeinrichtung
- 6: Aufnahmeplatte
- 7: Aufnahmeelement
- 8: Pneumatikzylinder
- 9: Grundplatte
- 10: Einrichtung zum Längsverfahren
- 11: Linearführung
- 12: Antriebsmotor
- 13: Antriebsriemen
- 14: rechenförmiger Riemen- oder Flachriemenförderer
- 15: Antriebsrolle
- 16: Umlenkrolle
- 101: Grundgestell
- 102: Einrichtung zum Längsverfahren
- 103: Lageraufnahme
- 104: Welle
- 105: Pneumatikzylinder
- 106: Hebeeinrichtung
- 107: Vertikalführung
- 201: Rahmengestell
- 202: Fahrwagen
- 203: Fahrgestell
- 204: Laufrad
- 205: Pneumatikzylinder
- 206: Hebeeinrichtung
- 207: Hebel
- 208: Welle
- 209: Kugelkopfgelenk
- 210: Antriebsriemen
- 211: Führungsrolle

## Patentansprüche

1. Vorrichtung zum Umsetzen von Transportgütern von einer Fördereinrichtung auf mindestens eine parallele oder in einem bestimmten Winkel zur Fördereinrichtung angeordnete Fördereinrichtung, wobei das Fördergut mittels den in die Vorrichtung integrierten und mit einem Eigenantrieb versehenen Förderrollen (2) auf eine bestimmte Position in der Vorrichtung gefahren wird und die Förderrollen (2) dabei in einem Halterahmen (1) befestigt und über Aufnahmen (3) an Querverbindern (4) befestigt sind, die unter den Förderrollen von einem Ende der Vorrichtung bis zum anderen Ende der Vorrichtung reichen und maximal die Breite der Förderrollen (2) haben und wiederum an ihren Enden an dem Halterahmen (1) befestigt sind, wobei die Vorrichtung mit einer Hebeeinrichtung (5) ausgestattet ist und über mindestens eine an dieser Hebeeinrichtung (5) angebrachte Aufnahmeplatte (6) verfügt, an welcher Aufnahmeelemente (7) befestigt sind, die sich im Zwischenraum zwischen den Förderrollen (2) befinden und deren obere Enden in Grundstellung sich unterhalb der Oberkante der Förderrollen (2) und in Arbeitsstellung sich oberhalb der Oberkante der Förderrollen (2) befinden, und wobei die Hebeeinrichtung (5) selbst auf einer Einrichtung zum Längsverfahren (10) der gesamten Hebeeinrichtung (5) befestigt ist und diese Einrichtung zum Längsverfahren (10) wiederum am Halterahmen (1) befestigt ist und in einem Winkel von 90° oder in einem beliebigen Winkel größer 0° und kleiner 180° zur ursprünglichen Förderrichtung auf mindestens eine parallele oder in einem bestimmten Winkel zur ursprünglichen Fördereinrichtung angeordnete Fördereinrichtung umgesetzt werden kann, wobei die Förderrichtung des Transportgutes (z.B. Längstransport des Fördergutes) sich nicht ändert und der Betrieb der vor- zwischen- und nachgeschalteten Fördereinrichtungen nicht unterbrochen wird.

2. Vorrichtung zum Umsetzen von Transportgütem von einer Fördereinrichtung auf mindestens eine parallele oder in einem bestimmten Winkel zur Fördereinrichtung angeordnete Fördereinrichtung, wobei das Fordergut mittels den in die Vorrichtung integrierten und mit einem Eigenantrieb versehenen Förderrollen (2) auf eine bestimmte Position in der Vorrichtung gefahren wird und die Förderrollen (2) dabei in einem Halterahmen (1) befestigt und über Aufnahmen (3) an Querverbindern (4) befestigt sind, die unter den Förderrollen von einem Ende der Vorrichtung bis zum anderen Ende der Vorrichtung reichen und maximal die Breite der Förderrollen (2) haben und wiederum an ihren Enden an dem Halterahmen (1) befestigt sind, wobei die Vorrichtung mit einer Hebeeinrichtung (5) ausgestattet ist und über mindestens eine an dieser Hebeeinrichtung (5) angebrachte Aufnahmeplatte (6) verfügt, an welcher Aufnahmeelemente (7) befestigt sind, die sich im Zwischenraum zwischen den Förderrollen (2) befinden und deren obere Enden in Grundstellung sich unterhalb der Oberkante der Förderrollen (2) und in Arbeitsstellung sich oberhalb der Oberkante der Förderrollen (2) befinden, und wobei Hebeeinrichtung (5) selbst auf einer Einrichtung zum Längsverfahren (10) der gesamten Hebeeinrichtung (5) befestigt ist und diese Einrichtung zum Längsverfahren (10) wiederum am Halterahmen (1) befestigt ist und in einem Winkel von 90° oder in einem beliebigen Winkel größer 0° und kleiner 180° zur ursprünglichen Förderrichtung auf mindestens eine zur ursprünglichen Fördereinrichtung angeordnete Fördereinrichtung umgesetzt werden kann, wobei die Förderrichtung des Transportgutes sich andert (z.B. von Längstransport in Quertransport auf der nachgeschalteten Fördereinrichtung) und der Weitertransport des umgesetzten Fördergutes mittels eines rechenförmigen Riemen- oder Flachriemenförderers (14) erfolgt, der in die Vorrichtung integriert ist und an den Querverbindern (4) befestigt ist und der über eine zentrale mit einem Eigenantrieb ausgestattete Antriebsrolle (15), mehrere Förderriemen und auf der Innenseite der Vorrichtung schmale Umlenkrollen (16), verfügt, die eine maximale Breite entsprechend der Breite der Querverbinder (4) aufweisen, wobei das Transportgut vom Platz auf dem das Transportgut umgesetzt wird auf eine nachgeschaltete Fördereinrichtung weitertransportiert und der Betrieb der vor- und nachgeschalteten Fördereinrichtungen nicht unterbrochen wird.

3. Vorrichtung zum Umsetzen von Transportgütern von einer Fördereinrichtung auf mindestens eine parallele oder in einem bestimmten Winkel zur Fördereinrichtung angeordnete Fördereinrichtung, wobei das Fördergut mittels den in die Vorrichtung integrierten und mit einem Eigenantrieb versehenen Förderrollen (2) auf eine bestimmte Position in der Vorrichtung gefahren wird und die Förderrollen (2) dabei in einem Halterahmen (1) befestigt und über Aufnahmen (3) an Querverbindern (4) befestigt sind, die unter den Förderrollen von einem Ende der Vorrichtung bis zum anderen Ende der Vorrichtung reichen und maximal die Breite der Förderrollen (2) haben und wiederum an ihren Enden an dem Halterahmen (1) befestigt sind, wobei die Vorrichtung über mindestens ein Aufnahmeelement (7) verfügt, das sich im Zwischenraum zwischen den Förderrollen (2) befindet und dessen obere Enden in Grundstellung sich unterhalb der Oberkante der Förderrollen (2) und in Arbeitsstellung sich oberhalb der Oberkante der Förderrollen (2) befinden und die Aufnahmeelemente (7) auf einer Aufnahmeplatte (6) montiert sind, die wiederum auf mindestens einer Einrichtung zum Längsverfahren (102) befestigt ist, wobei die gesamte Einrichtung zum Längsverfahren (102) über mindestens eine Hebeeinrichtung (106) mit dem Grundgestell (101) verbunden ist und in einem Winkel von 90° oder in einem beliebigen Winkel größer 0° und kleiner 180° zur ursprünglichen Förderrichtung auf mindestens eine parallele oder in einem bestimmten Winkel zur ursprünglichen Fördereinrichtung angeordnete Fördereinrichtung umgesetzt werden kann und sich die Förderrichtung des Transportgutes (z.B. Längstransport des Fördergutes) nicht ändert und der Betrieb der vorzwischen- und nachgeschalteten Fördereinrichtungen nicht unterbrochen wird.

4. Vorrichtung zum Umsetzen von Transportgütern von einer Fördereinrichtung auf mindestens eine parallele oder in einem bestimmten Winkel zur Fördereinrichtung angeordnete Fördereinrichtung, wobei das Fördergut mittels den in die Vorrichtung integrierten und mit einem Eigenantrieb versehenen Förderrollen (2) auf eine bestimmte Position in der Vorrichtung gefahren wird und die Förderrollen (2) dabei in einem Halterahmen (1) befestigt und über Aufnahmen (3) an Querverbindern (4) befestigt sind, die unter den Förderrollen von einem Ende der Vorrichtung bis zum anderen Ende der Vorrichtung reichen und maximal die Breite der Förderrollen (2) haben und wiederum an ihren Enden an dem Halterahmen (1) befestigt sind, wobei die Vorrichtung mit mindestens einer Hebeeinrichtung (206) ausgestattet ist und über mindestens eine an dieser Hebeeinrichtung (206) angebrachte Aufnahmeplatte (6) verfügt, an welcher Aufnahmeelemente (7) befestigt sind, die sich im Zwischenraum zwischen den Förderrollen (2) befinden und deren obere Enden in Grundstellung sich unterhalb der Oberkante der Förderrollen (2) und in Arbeitsstellung sich oberhalb der Oberkante der Förderrollen (2) befinden, und wobei die Hebeeinrichtung (206) selbst auf mindestens einer Einrichtung zum Längsverfahren der gesamten Hebeeinrichtung (206) befestigt ist und diese Einrichtung zum Längsverfahren als Fahrwagen (202) und / oder Gleitschlitten ausgeführt ist, wobei sich die fahrenden oder gleitenden Elemente des Fahrwagens (202) und / oder Gteitschlittens im Rahmengestell (201) abstützen und der Fahrwagen (202) und / oder der Gleitschlitten, sowie die Aufnahmeelemente (7) und die Förderrollen (2) so ausgeführt sein können, daß die Vorrichtung als Kurve ausgelegt ist und der Fahrwagen (202) und / oder Gleitschlitten kurvengängig sind und in einem Winkel von 90° oder in einem beliebigen Winkel größer 0° und kleiner 180° zur ursprünglichen Förderrichtung auf mindestens eine parallele oder in einem bestimmten Winkel zur ursprünglichen Fördereinrichtung angeordnete Fördereinrichtung umgesetzt werden können, wobei die Förderrichtung des Transportgutes (z.B. Längstransport des Fördergutes sich nicht ändert und der Betrieb der vorzwischen- und nachgeschalteten Fördereinrichtungen nicht unterbrochen wird.

5. Vorrichtung nach Anspruch 1 oder 2 **dadurch gekennzeichnet, daß** die vertikale Hubbewegung der Hebeeinrichtung (5) durch mindestens einen Pneumatikzylinder (8) erfolgt der an einem Ende auf der Grundplatte (9) montiert ist und an dessen anderen Ende mindestens eine Aufnahmeplatte (6) montiert ist.

6. Vorrichtung nach Anspruch 1 oder 2 **dadurch gekennzeichnet, daß** die vertikale Hubbewegung der Hebeeinrichtung (5) durch eine Linearführung mit Motorantrieb erfolgt und der Antriebsmotor und mindestens eine Führungsvorrichtung für mindestens eine Aufnahmeplatte (6), die als z.B. vertikale Säulenführung ausgeführt ist auf der Grundplatte (9) montiert ist und am anderen Ende der Linearführung eine Aufnahmeplatte (6) montiert ist.

7. Vorrichtung nach Anspruch 1 oder 2 **dadurch gekennzeichnet, daß** die Hebeeinrichtung (5) über mindestens eine Führungsvorrichtung verfügt, die als z.B. vertikale Säulenführung ausgeführt ist und deren eines Ende z.B. auf der Grundplatte (9) befestigt ist und deren anderes Ende, also die Führungsbuchse an der Aufnahmeplatte (6) befestigt ist.

8. Vorrichtung nach Anspruch 1 oder 2 **dadurch gekennzeichnet, daß** die vertikale Hubbewegung der Hebeeinrichtung (5) durch mindestens einen Hubmagneten erfolgt, der an einem Ende auf der Grundplatte (9) montiert ist und an dessen anderen Ende mindestens eine Aufnahmeplatte (6) montiert ist.

9. Vorrichtung nach Anspruch 1 oder 2 **dadurch gekennzeichnet, daß** die horizontale Längsbewegung der Einrichtung zum Längsverfahren (10) durch eine Linearführung (11) mit Antriebsmotor (12) und umlaufenden Antriebsriemen (13) (z.B. Zahnriemen) oder eine Antriebskette erfolgt, wobei die Linearführung (11) an Ihren Enden mit dem Halterahmen (1) verbunden ist und auf der Linearführung (11) die Hebeeinrichtung (5) montiert ist.

10. Vorrichtung nach Anspruch 1 oder 2 **dadurch gekennzeichnet, daß** die horizontale Längsbewegung der Einrichtung zum Längsverfahren (10) durch mindestens eine Säulenführungen mit Führungsschuhen erfolgt, wobei die Säulenführung an Ihren Enden mit dem Halterahmen (1) verbunden ist und auf den Führungsschuhen die Hebeeinrichtung (5) montiert ist und die horizontale Längsbewegung der Hebeeinrichtung (5) durch einen Antriebsmotor erfolgt, der im Bereich der Einrichtung zum Längsverfahren (10) raumökonomisch untergebracht ist und über einen umlaufenden Antriebsriemen (13) (z.B. Zahnriemen) oder eine Antriebskette verfügt, der im Bereich der Hebeeinrichtung (5) im Eingriff ist und diese in horizontaler Richtung nach beiden Seiten bezüglich der Ausgangsposition bewegen kann.

11. Vorrichtung nach Anspruch 1 oder 2 **dadurch gekennzeichnet, daß** die horizontale Längsbewegung der Einrichtung zum Längsverfahren (10) durch mindestens eine Säulenführungen mit Führungsschuhen erfolgt, wobei die Säulenführung an Ihren Enden mit dem Halterahmen verbunden ist und auf den Führungsschuhen die Hebeeinrichtung (5) montiert ist und die horizontale Längsbewegung der Hebeeinrichtung (5) durch einen doppelt wirkenden Pneumatikzylinder erfolgt, der im Bereich der Einrichtung zum Längsverfahren (10) raumökonomisch untergebracht ist und der im Bereich der Hebeeinrichtung (5) im Eingriff ist und diese in horizontaler Richtung nach beiden Seiten bezüglich der Ausgangsposition bewegen kann.

12. Vorrichtung nach Anspruch 1 oder 2 **dadurch gekennzeichnet, daß** die horizontale Längsbewegung der Einrichtung zum Längsverfahren (10) durch mindestens eine Säulenführungen mit Führungsschuhen erfolgt, wobei die Säulenführung an Ihren Enden mit dem Halterahmen verbunden ist und auf den Führungsschuhen die Hebeeinrichtung (5) montiert ist und die horizontale Längsbewegung der Hebeeinrichtung (5) durch Magnetschwebetechnik erfolgt, die im Bereich der Einrichtung zum Längsverfahren (10) raumökonomisch untergebracht ist und die im Bereich der Hebeeinrichtung (5) im Eingriff ist und diese in horizontaler Richtung nach beiden Seiten bezüglich der Ausgangsposition bewegen kann.

13. Vorrichtung nach einem der Ansprüche 1 bis 12 **dadurch gekennzeichnet, daß** die Aufnahmeelemente (7) für das Fördergut als Stäbe rechenförmig ausgeführt sind, die in vertikaler Richtung auf der Aufnahmeplatte (6) angeordnet sind und die die Last des Fördergutes punktförmig aufnehmen und daß an den Aufnahmeelementen (7) an der Kontaktfläche zum Fördergut ein geräuschdämmender Belag der auch das Rutschen des Fördergutes verhindert aufgebracht ist.

14. Vorrichtung nach einem der Ansprüche 1 bis 13 **dadurch gekennzeichnet, daß** die Aufnahmeelemente (7) für das Fördergut als Platten ausgeführt sind, die in vertikaler Richtung auf der Aufnahmeplatte (6) angeordnet sind und die die Last des Fördergutes linienförmig aufnehmen und daß an den Aufnahmeelementen (7) an der Kontaktfläche zum Fördergut ein geräuschdämmender Belag der auch das Rutschen des Fördergutes verhindert aufgebracht ist.

15. Vorrichtung nach einem der Ansprüche 1 bis 14 **dadurch gekennzeichnet, daß** die Vorrichtung im Baukastensystem (Modulbauweise) aufgebaut ist, so daß eine Kompatibilität zu den unterschiedlichen bestehenden Fördereinrichtungen besteht und daß eine Nachrüstung von bestehenden Fördereinrichtungen problemlos ermöglicht wird.

16. Vorrichtung nach einem der Ansprüche 1 bis 15 **dadurch gekennzeichnet, daß** die Vorrichtung in ihrer technischen Ausführung in den unterschiedlichesten Materialien (z.B. Stahl, Aluminium) ausgeführt sein kann.

17. Vorrichtung nach Anspruch 1 **dadurch gekennzeichnet, daß** die vertikale Hubbewegung der Hebeeinrichtung (106) durch mindestens einen Pneumatikzylinder (105) erfolgt, der an einem Ende mit dem Grundgestell (101) verbunden ist und dessen anderes Ende mit einer im Winkel von 90° zur Hubbewegung angeordneten Welle (104) fest verbunden ist, wobei die Welle (104) an mindestens einer Lageraufnahme (103), die mit der Einrichtung zum Längsverfahren (102) fest verbunden ist gelagert ist und sich im äußeren Bereich eine Vertikatführung (107), die sich gegen das Grundgestell (101) abstützt und deren äußerste zu den Seitenplatten des Grundgestells (101) zeigenden Flächen in einer Art in vertikaler Richtung radial geschliffen sind, so daß ein Verhaken bei der Hubbewegung nicht vorkommen kann.

18. Vorrichtung nach Anspruch 1 **dadurch gekennzeichnet, daß** die Antriebe der Hebeeinrichtungen (106) und die Einrichtung zum Längsverfahren (102) in einem abgeschlossenen Profil, welches in Längsrichtung in der Vorrichtung angeordnet ist integriert sind, so daß eine dichte Kapselung ermöglicht wird und daß die Antriebe der Hebeeinrichtungen (106) auf Hebel, die außerhalb des abgeschlossenen Profils liegen und die als z.B. Zweigelenk oder Dreigelenk ausgeführt sein können wirken, und daß sich diese Hebel am Grundgestell (101) abstützen, so daß sich die Einheit aus Antrieben der Hebeeinrichtungen (106) und Einrichtung zum Längsverfahren (102) im abgeschlossenen Profil heben und senken läßt.

19. Vorrichtung nach den Ansprüchen 1 bis 4 **dadurch gekennzeichnet, daß** der Antrieb der Hebeeinrichtung (106, 206) entweder pneumatisch, elektrisch, elektromagnetisch oder hydraulisch erfolgt und die Vertikalführung über Hebel- und / oder Gelenkeinrichtungen, Linearführungen, Säulenführungen mit Führungsschuhen oder sonstigen nach Stand der Technik bekannten Führungseinrichtungen erfolgt.

20. Vorrichtung nach Anspruch 2 **dadurch gekennzeichnet, daß** die Hebeeinrichtungen (206) auf dem Fahrwagen (202) befestigt sind und der Fahrwagen (202) mit Laufrädern (204) versehen ist, die im Bereich des Rahmengestells (201) z.B. in einem hochkant stehenden U-Profil, welches Bestandteil des Rahmengestells (201) ist laufen und daß Führungsrollen (211), die ebenfalls am Fahrwagen (202) einstellbar angebracht sind den Fahrwagen (202) im Rahmengestell (201) in Fahrtrichtung längs führen, und daß der Fahrwagen (202) entweder über einen pneumatischen, elektrischen, elektromagnetischen oder hydraulischen Antrieb, der im oder außerhalb des Rahmengestells (201) angebracht sein kann verfügt und daß die Kraftübertragung an den Fahrwagen (202) entweder direkt über die Antriebseinheit erfolgt oder über einen Antriebsriemen (210), der als Zahnriemen ausgeführt sein kann erfolgt und daß dieser Antriebsriemen im Modul umlaufend angeordnet ist und an einer Aufnahme mit dem Fahrwagen (202) fest aber einstellbar verbunden ist.

21. Vorrichtung nach den Ansprüchen 1 oder 2 **dadurch gekennzeichnet, daß** die Aufnahmeelemente (7) an ihrer Oberseite so gestaltet sind, daß Einführhilfen an der linken und rechten Kante der linienförmigen Auflageflächen angebracht sind, so daß das aufzunehmende Fördergut zentriert oder genau positioniert werden kann.

22. Vorrichtung nach den Ansprüchen 1 oder 2 **dadurch gekennzeichnet, daß** die Aufnahmeelemente (7) an ihrer Oberseite so gestaltet sind, daß einzelne Segmente der linienförmigen Auflageflächen so ausgelegt sind, daß sie sich bei der Aufnahme des Fördergutes absenken und dadurch das Fördergut fixiert wird, so daß ein Umsetzen des Fördergutes mit sehr hohen Geschwindigkeiten ermöglicht wird.

23. Vorrichtung nach den Ansprüchen 1 oder 2 **dadurch gekennzeichnet, daß** die Umsetzbewegung so erfolgt, daß mit gedämpftem Anfahr- und Abbremsverhalten gefahren werden kann, wobei dies durch die Auslegung der Antriebseinheiten , z.B. durch das Fahren von Rampen und durch die im Modul integrierte Steuerung ermöglicht wird und daß durch lichttechnische Einrichtungen und die Verwendung von Schrittgebern jeder beliebige Platz in Längsrichtung des Moduls punktgenau angefahren werden kann.

## Claims

1. Apparatus for transferring transportable articles from one conveying arrangement to at least one conveying arrangement which is parallel or arranged at a certain angle to the conveying arrangement, it being the case that the conveyable articles are moved to a certain position in the apparatus by means of the conveying rollers (2), which are integrated in the apparatus and are provided with a dedicated drive, and the conveying rollers (2) here are fastened in a retaining frame (1) and are fastened, via mounts (3), on transverse connectors (4) which extend beneath the conveying rollers from one end of the apparatus to the other end of the apparatus and are no wider than the conveying rollers (2) and, in turn, are fastened on the retaining frame (1) at their ends, that the apparatus is equipped with a lifting arrangement (5) and has at least one accommodating plate (6) which is fitted on this lifting arrangement (5) and on which are fastened accommodating elements (7) which are located in the interspace between the conveying rollers (2) and of which the top ends, in the basic position, are located beneath the top edge of the conveying rollers (2) and, in the operating position, are located above the top edge of the conveying rollers (2), and that the lifting arrangement (5) itself is fastened on an arrangement for the longitudinal displacement (10) of the lifting arrangement (5) as a whole, and this longitudinal-displacement arrangement (10), in turn, is fastened on the retaining frame (1), and transfer to at least one conveying arrangement which is parallel or arranged at a certain angle to the original conveying arrangement can take place at an angle of 90°, or at any desired angle greater than 0° and less than 180°, to the original conveying direction, there being no change in the conveying direction of the transportable articles (e.g. longitudinal transportation of the conveyable articles) and no interruption in the operation of the conveying arrangements provided upstream, downstream and in an intermediate position.

2. Apparatus for transferring transportable articles from one conveying arrangement to at least one conveying arrangement which is parallel or arranged at a certain angle to the conveying arrangement, it being the case that the conveyable articles are moved to a certain position in the apparatus by means of the conveying rollers (2), which are integrated in the apparatus and are provided with a dedicated drive, and the conveying rollers (2) here are fastened in a retaining frame (1) and are fastened, via mounts (3), on transverse connectors (4) which extend beneath the conveying rollers from one end of the apparatus to the other end of the apparatus and are no wider than the conveying rollers (2) and, in turn, are fastened on the retaining frame (1) at their ends, that the apparatus is equipped with a lifting arrangement (5) and has at least one accommodating plate (6) which is fitted on this lifting arrangement (5) and on which are fastened accommodating elements (7) which are located in the interspace between the conveying rollers (2) and of which the top ends, in the basic position, are located beneath the top edge of the conveying rollers (2) and, in the operating position, are located above the top edge of the conveying rollers (2), and that the lifting arrangement (5) itself is fastened on an arrangement for the longitudinal displacement (10) of the lifting arrangement (5) as a whole, and this longitudinal-displacement arrangement (10), in turn, is fastened on the retaining frame (1), and transfer to at least one conveying arrangement which is parallel or arranged at a certain angle to the original conveying arrangement can take place at an angle of 90°, or at any desired angle greater than 0° and less than 180°, to the original conveying direction, there being a change in the conveying direction of. the transportable articles (e.g. from longitudinal transportation to transverse transportation on the downstream conveying arrangement), and the transferred conveyable articles being transported further by means of a rake-like belt or flat-belt conveyor (14), which is integrated in the apparatus and is fastened on the transverse connectors (4) and has a central drive roller (15) equipped with a dedicated drive and also has a plurality of conveying belts and, on the inside of the apparatus, narrow deflecting rollers (16) which have a maximum width corresponding to the width of the transverse connectors (4), the transportable articles being transported further to a downstream conveying arrangement, from the location at which the transportable articles are transferred, and there being no interruption in the operation of the conveying arrangements provided upstream and downstream.

3. Apparatus for transferring transportable articles from one conveying arrangement to at least one conveying arrangement which is parallel or arranged at a certain angle to the conveying arrangement, it being the case that the conveyable articles are moved to a certain position in the apparatus by means of the conveying rollers (2), which are integrated in the apparatus and are provided with a dedicated drive, and the conveying rollers (2) here are fastened in a retaining frame (1) and are fastened, via mounts (3), on transverse connectors (4) which extend beneath the conveying rollers from one end of the apparatus to the other end of the apparatus and are no wider than the conveying rollers (2) and, in turn, are fastened on the retaining frame (1) at their ends, that the apparatus has at least one accommodating element (7) which is located in the interspace between the conveying rollers (2) and of which the top end, in the basic position, is located beneath the top edge of the conveying rollers (2) and, in the operating position, is located above the top edge of the conveying rollers (2), and the accommodating elements (7) are installed on an accommodating plate (6) which, in turn, is fastened on at least one longitudinal-displacement arrangement (102), and that the entire longitudinal-displacement arrangement (102) is connected to the basic framework (101) via at least one lifting arrangement (106), and transfer to at least one conveying arrangement which is parallel or arranged at a certain angle to the original conveying arrangement can take place at an angle of 90°, or at any desired angle greater than 0° and less than 180°, to the original conveying direction, and there is no change in the conveying direction of the transportable articles (e.g. longitudinal transportation of the conveyable articles) and no interruption in the operation of the conveying arrangements provided upstream, downstream and in an intermediate position.

4. Apparatus for transferring transportable articles from one conveying arrangement to at least one conveying arrangement which is parallel or arranged at a certain angle to the conveying arrangement, it being the case that the conveyable articles are moved to a certain position in the apparatus by means of the conveying rollers (2), which are integrated in the apparatus and are provided with a dedicated drive, and the conveying rollers (2) here are fastened in a retaining frame (1) and are fastened, via mounts (3), on transverse connectors (4) which extend beneath the conveying rollers from one end of the apparatus to the other end of the apparatus and are no wider than the conveying rollers (2) and, in turn, are fastened on the retaining frame (1) at their ends, that the apparatus is equipped with at least one lifting arrangement (206) and has at least one accommodating plate (6) which is fitted on this lifting arrangement (206) and on which are fastened accommodating elements (7) which are located in the interspace between the conveying rollers (2) and of which the top ends, in the basic position, are located beneath the top edge of the conveying rollers (2) and, in the operating position, are located above the top edge of the conveying rollers (2), and that the lifting arrangement (206) itself is fastened on at least one arrangement for the longitudinal displacement of the lifting arrangement (206) as a whole, and this longitudinal-displacement arrangement is configured as a carriage (202) and/or slide, in which case the travelling or sliding elements of the carriage (202) and/or slide are supported in the framework (201), and the carriage (202) and/or the slide and also the accommodating elements (7) and the conveying rollers (2) may be configured such that the apparatus is curved and the carriage (202) and/or slide can negotiate curves, and transfer to at least one conveying arrangement which is parallel or arranged at a certain angle to the original conveying arrangement can take place at an angle of 90°, or at any desired angle greater than 0° and less than 180°, to the original conveying direction, there being no change in the conveying direction of the transportable articles (e.g. longitudinal transportation of the conveyable articles) and no interruption in the operation of the conveying arrangements provided upstream, downstream and in an intermediate position.

5. Apparatus according to Claim 1 or 2, **characterized in that** the vertical lifting movement of the lifting arrangement (5) takes place by means of at least one pneumatic cylinder (8) which is installed, at one end, on the base plate (9) and has at least one accommodating plate (6) installed at its other end.

6. Apparatus according to Claim 1 or 2, **characterized in that** the vertical lifting movement of the lifting arrangement (5) takes place by means of a linear guide with motor drive, and the drive motor and at least one guide means for at least one accommodating plate (6), which is configured as, for example, a vertical column guide, are installed on the base plate (9) and an accommodating plate (6) is installed at the other end of the linear guide.

7. Apparatus according to Claim 1 or 2, **characterized in that** the lifting arrangement (5) has at least one guide means which is configured as, for example, a vertical column guide and of which one end is fastened, for example, on the base plate (9) and the other end, that is to say the guide bushing, is fastened on the accommodating plate (6).

8. Apparatus according to Claim 1 or 2, **characterized in that** the vertical lifting movement of the lifting arrangement (5) takes place by means of at least one lifting magnet which is installed, at one end, on the base plate (9) and has at least one accommodating plate (6) installed at its other end.

9. Apparatus according to Claim 1 or 2, **characterized in that** the horizontal longitudinal movement of the longitudinal-displacement arrangement (10) takes place by means of a linear guide (11) with drive motor (12) and circulating drive belts (13) (e.g. toothed belts) or a drive chain, the linear guide (11) being connected, at its ends, to the retaining zone (1) and the lifting arrangement (5) being installed on the linear guide (11).

10. Apparatus according to Claim 1 or 2, **characterized in that** the horizontal longitudinal movement of the longitudinal-displacement arrangement (10) takes place by means of at least one column guide with guide shoes, the column guide being connected, at its ends, to the retaining frame (1) and the lifting arrangement (5) being installed on the guide shoes and the horizontal longitudinal movement of the lifting arrangement (5) taking place by means of a drive motor which is accommodated in a space-saving manner in the region of the longitudinal-displacement arrangement (10) and has a circulating drive belt (13) (e.g. toothed belt) or a drive chain, which engages in the region of the lifting arrangement (5) and can move the latter horizontally towards both sides in relation to the starting position.

11. Apparatus according to Claim 1 or 2, **characterized in that** the horizontal longitudinal movement of the longitudinal-displacement arrangement (10) takes place by means of at least one column guide with guide shoes, the column guide being connected, at its ends, to the retaining frame and the lifting arrangement (5) being installed on the guide shoes and the horizontal longitudinal movement of the lifting arrangement (5) taking place by means of a double-action pneumatic cylinder which is accommodated in a space-saving manner in the region of the longitudinal-displacement arrangement (10) and which engages in the region of the lifting arrangement (5) and can move the latter horizontally towards both sides in relation to the starting position.

12. Apparatus according to Claim 1 or 2, **characterized in that** the horizontal longitudinal movement of the longitudinal-displacement arrangement (10) takes place by means of at least one column guide with guide shoes, the column guide being connected, at its ends, to the retaining frame and the lifting arrangement (5) being installed on the guide shoes and the horizontal longitudinal movement of the lifting arrangement (5) taking place by means of magnetic levitation, the appropriate unit being accommodated in a space-saving manner in the region of the longitudinal-displacement arrangement (10) and engaging in the region of the lifting arrangement (5) and being capable of moving the latter horizontally towards both sides in relation to the starting position.

13. Apparatus according to one of Claims 1 to 12, **characterized in that** the accommodating elements (7) for the conveyable articles are configured in a rake-like manner as bars which are arranged in the vertical direction on the accommodating plate (6) and bear the load of the conveyable articles in punctiform fashion, and **in that** a sound-insulating covering, which also prevents the conveyable articles from slipping, is applied to the accommodating elements (7) over the contact surface in relation to the conveyable articles.

14. Apparatus according to one of Claims 1 to 13, **characterized in that** the accommodating elements (7) for the conveyable articles are configured as plates which are arranged in the vertical direction on the accommodating plate (6) and bear the load of the conveyable articles in linear form, and **in that** a sound-insulating covering, which also prevents the conveyable articles from slipping, is applied to the accommodating elements (7) over the contact surface in relation to the conveyable articles.

15. Apparatus according to one of Claims 1 to 14, **characterized in that** the apparatus is of modular construction, with the result that it is compatible with the various existing conveying arrangements, and that it is easily possible to retrofit existing conveying arrangements.

16. Apparatus according to one of Claims 1 to 15, **characterized in that** an extremely wide variety of different materials (e.g. steel, aluminium) can be used for the technical configuration of the apparatus.

17. Apparatus according to Claim 1, **characterized in that** the vertical lifting movement of the lifting arrangement (106) takes place by means of at least one pneumatic cylinder (105) which is connected, at one end, to the basic framework (101) and of which the other end is fixed to a shaft (104) arranged at an angle of 90° to the lifting movement, the shaft (104) being mounted on at least one bearing mount (103), which is fixed to the longitudinal-displacement arrangement (102), and there being located in the outer region a vertical guide (107) which is supported against the basic framework (101) and of which the outermost surfaces oriented towards the side panels of the basic framework (101) are ground radially after a fashion in the vertical direction, so preventing the occurrence of any catching during the lifting movements.

18. Apparatus according to Claim 1, **characterized in that** the drive of the lifting arrangements (106) and the longitudinal-displacement arrangements (102) are integrated in a closed-off profile arranged longitudinally in the apparatus, this rendering sealed encapsulation possible, and **in that** the drives of the lifting arrangements (106) act on levers which are located outside the closed-off profile and may be configured as, for example, a two-hinged mechanism or three-hinged mechanism, and **in that** these levers are supported on the basic framework (101), with the result that the unit comprising drives of the lifting arrangements (106) and the longitudinal-displacement arrangement (102) can be raised and lowered in the closed-off profile.

19. Apparatus according to Claims 1 to 4, **characterized in that** the lifting arrangement (106, 206) is driven pneumatically, electrically, electromagnetically or hydraulically and the vertical guidance takes place via lever and/or joint arrangements, linear guides, column guides with guide shoes, or other guide arrangements known from the prior art.

20. Apparatus according to Claim 2, **characterized in that** the lifting arrangements (206) are fastened on the carriage (202) and the carriage (202) is provided with running wheels (204) which run in the region of the framework (201), e.g. in an upended U-profile forming a constituent part of the framework (201), and **in that** guide rollers (211), which are fitted in an adjustable manner likewise on the carriage (202), guide the carriage (202) in the framework (201) along the direction of travel, and **in that** the carriage (202) has a pneumatic, electric, electromagnetic or hydraulic drive which may be fitted in or outside the framework (201), and **in that** the transmission of power to the carriage (202) takes place either directly via the drive unit or via a drive belt (210), which may be configured as a toothed belt, and **in that** this drive belt is arranged to circulate in the module and, on a mount, is connected in a fixed but adjustable manner to the carriage (202).

21. Apparatus according to Claim 1 or 2, **characterized in that** the accommodating elements (7) are configured, on their top side, such that introduction aids are fitted on the left-hand and right-hand edges of the linear bearing surfaces, with the result that the conveyable articles which are to be accommodated can be positioned in a centred or precise manner.

22. Apparatus according to Claim 1 or 2, **characterized in that** the accommodating elements (7) are configured, on their top side, such that individual segments of the linear bearing surfaces are designed such that they are lowered when the conveyable articles are accommodated, the conveyable articles are thus fixed, with the result that the conveyable articles can be transferred at very high speeds.

23. Apparatus according to Claim 1 or 2, **characterized in that** the transfer movement takes place such that it is possible to operate with damp start-up and braking behaviour, this being made possible by the design of the drive units, e.g. by the negotiation of ramps and by the control means integrated in the module, and **in that** lighting arrangements and use of incremental transmitters make it possible to move towards any desired location in the longitudinal direction of the module with point precision.

## Revendications

1. Dispositif pour transférer des marchandises transportées d'un convoyeur sur au moins un autre convoyeur parallèle ou disposé sous un angle déterminé par rapport au premier convoyeur, dans lequel la marchandise transportée est amenée à une position déterminée dans le dispositif au moyen des rouleaux de transport (2) intégrés dans le dispositif et pourvus d'un entraînement propre, et les rouleaux de transport (2) sont en l'occurrence fixés dans un cadre.de maintien (1) et sont fixés par des logements (3) sur des traverses (4), qui s'étendent sous les rouleaux transporteurs d'une extrémité du dispositif à l'autre extrémité du dispositif et qui ont au maximum la largeur des rouleaux de transport (2) et qui sont à leurs extrémités de nouveau fixées sur le cadre de maintien (1), dans lequel le dispositif est équipé d'un appareil de levage (5) et dispose d'au moins un plateau de réception (6) monté sur cet appareil de levage (5), sur lequel sont fixés des éléments de réception (7) qui se trouvent dans l'espace intermédiaire entre les rouleaux de transport (2), et dont les extrémités supérieures se trouvent en position initiale en dessous de l'arête supérieure des rouleaux de transport (2) et qui se trouvent en position de travail au-dessus de l'arête supérieure des rouleaux de transport (2), et dans lequel l'appareil de levage (5) lui-même est fixé sur un dispositif pour le déplacement longitudinal (10) de tout l'appareil de levage (5) et ce dispositif pour le déplacement longitudinal (10) est de nouveau fixé sur le cadre de maintien (1) et peut être transféré sous un angle de 90° ou sous un angle quelconque plus grand que 0° et plus petit que 180° par rapport à la direction de transport initiale sur au moins un convoyeur parallèle ou disposé sous un angle déterminé par rapport au convoyeur initial, dans lequel la direction de transport de la marchandise transportée (par exemple transport longitudinal de la marchandise transportée) ne change pas et le fonctionnement des convoyeurs précédents, intermédiaires et suivants n'est pas interrompu.

2. Dispositif pour transférer des marchandises transportées d'un convoyeur sur au moins un autre convoyeur parallèle ou disposé sous un angle déterminé par rapport au premier convoyeur, dans lequel la marchandise transportée est amenée à une position déterminée dans le dispositif au moyen des rouleaux de transport (2) intégrés dans le dispositif et pourvus d'un entraînement propre, et les rouleaux de transport (2) sont en l'occurrence fixés dans un cadre de maintien (1) et sont fixés par des logements (3) sur des traverses (4), qui s'étendent sous les rouleaux transporteurs d'une extrémité du dispositif à l'autre extrémité du dispositif et qui ont au maximum la largeur des rouleaux de transport (2) et qui sont à leurs extrémités de nouveau fixées sur le cadre de maintien (1), dans lequel le dispositif est équipé d'un appareil de levage (5) et dispose d'au moins un plateau de réception (6) monté sur cet appareil de levage (5), sur lequel sont fixés des éléments de réception (7) qui se trouvent dans l'espace intermédiaire entre les rouleaux de transport (2), et dont les extrémités supérieures se trouvent en position initiale en dessous de l'arête supérieure des rouleaux de transport (2) et qui se trouvent en position de travail au-dessus de l'arête supérieure des rouleaux de transport (2), et dans lequel l'appareil de levage (5) lui-même est fixé sur un dispositif pour le déplacement longitudinal (10) de tout l'appareil de levage (5) et ce dispositif pour le déplacement longitudinal (10) est de nouveau fixé sur le cadre de maintien (1) et peut être transféré sous un angle de 90° ou sous un angle quelconque plus grand que 0° et plus petit que 180° par rapport à la direction de transport initiale sur au moins un convoyeur disposé par rapport au convoyeur initial, dans lequel la direction de transport de la marchandise transportée change (par exemple de transport longitudinal à transport transversal sur le convoyeur suivant) et le transport ultérieur de la marchandise transportée transférée est effectué au moyen d'un transporteur à doigts à courroie ou à bande plate (14), qui est intégré dans le dispositif et qui est fixé aux traverses (4) et qui dispose d'un rouleau d'entraînement central (15) équipé d'un entraînement propre, de plusieurs courroies transporteuses et de rouleaux de déviation (16) étroits sur le côté intérieur du dispositif, qui présentent une largeur maximale correspondant à la largeur des traverses (4), dans lequel la marchandise transportée est transmise sur un convoyeur suivant depuis l'endroit où la marchandise transportée est transférée, et le fonctionnement des convoyeurs précédents et suivants n'est pas interrompu.

3. Dispositif pour transférer des marchandises transportées d'un convoyeur sur au moins un autre convoyeur parallèle ou disposé sous un angle déterminé par rapport au premier convoyeur, dans lequel la marchandise transportée est amenée à une position déterminée dans le dispositif au moyen des rouleaux de transport (2) intégrés dans le dispositif et pourvus d'un entraînement propre, et les rouleaux de transport (2) sont en l'occurrence fixés dans un cadre de maintien (1) et sont fixés par des logements (3) sur des traverses (4), qui s'étendent sous les rouleaux transporteurs d'une extrémité du dispositif à l'autre extrémité du dispositif et qui ont au maximum la largeur des rouleaux de transport (2) et qui sont à leurs extrémités de nouveau fixées sur le cadre de maintien (1), dans lequel le dispositif dispose d'au moins un élément de réception (7) qui se trouve dans l'espace intermédiaire entre les rouleaux de transport (2) et dont les extrémités supérieures se trouvent en position initiale en dessous de l'arête supérieure des rouleaux de transport (2) et qui se trouvent en position de travail au-dessus de l'arête supérieure des rouleaux de transport (2) et les éléments de réception (7) sont montés sur un plateau de réception (6), qui est à nouveau fixé sur au moins un dispositif pour le déplacement longitudinal (102), dans lequel tout le dispositif pour le déplacement longitudinal (102) est relié au châssis de base (101) par au moins un appareil de levage (106) et peut être transféré sous un angle de 90° ou sous un angle quelconque plus grand que 0° et plus petit que 180° par rapport à la direction de transport initiale sur au moins un convoyeur parallèle ou disposé sous un angle déterminé par rapport au convoyeur initial et la direction de transport de la marchandise transportée (par exemple transport longitudinal de la marchandise transportée) ne change pas et le fonctionnement des convoyeurs précédents, intermédiaires et suivants n'est pas interrompu.

4. Dispositif pour transférer des marchandises transportées d'un convoyeur sur au moins un autre convoyeur parallèle ou disposé sous un angle déterminé par rapport au premier convoyeur, dans lequel la marchandise transportée est amenée à une position déterminée dans le dispositif au moyen des rouleaux de transport (2) intégrés dans le dispositif et pourvus d'un entraînement propre, et les rouleaux de transport (2) sont en l'occurrence fixés dans un cadre de maintien (1) et sont fixés par des logements (3) sur des traverses (4), qui s'étendent sous les rouleaux transporteurs d'une extrémité du dispositif à l'autre extrémité du dispositif et qui ont au maximum la largeur des rouleaux de transport (2) et qui sont à leurs extrémités de nouveau fixées sur le cadre de maintien (1), dans lequel le dispositif est équipé d'au moins un appareil de levage (206) et dispose d'au moins un plateau de réception (6) monté sur cet appareil de levage (206), sur lequel sont fixés des éléments de réception (7) qui se trouvent dans l'espace intermédiaire entre les rouleaux de transport (2), et dont les extrémités supérieures se trouvent en position initiale en dessous de l'arête supérieure des rouleaux de transport (2) et qui se trouvent en position de travail au-dessus de l'arête supérieure des rouleaux de transport (2), et dans lequel l'appareil de levage (206) lui-même est fixé sur au moins un dispositif pour le déplacement longitudinal de tout l'appareil de levage (206) et ce dispositif pour le déplacement longitudinal se présente sous la forme d'un chariot (202) et/ou d'un traîneau, dans lequel les éléments roulants ou glissants du chariot (202) et/ou du traîneau prennent appui dans le cadre de maintien (201) et le chariot (202) et/ou le traîneau ainsi que les éléments de réception (7) et les rouleaux de transport (2) peuvent être configurés de telle façon que le dispositif soit conçu en courbe et que le chariot (202) et/ou le traîneau suivent la courbe et puissent être transférés sous un angle de 90° ou sous un angle quelconque plus grand que 0° et plus petit que 180° par rapport à la direction de transport initiale sur au moins un convoyeur parallèle ou disposé sous un angle déterminé par rapport au convoyeur initial, dans lequel la direction de transport de la marchandise transportée (par exemple transport longitudinal de la marchandise transportée) ne change pas et le fonctionnement des convoyeurs précédents, intermédiaires et suivants n'est pas interrompu.

5. Dispositif selon la revendication 1 ou 2, **caractérisé en ce que** le mouvement de levage vertical de l'appareil de levage (5) est effectué par au moins un cylindre pneumatique (8), qui est monté à une extrémité sur la plaque de base (9) et porte à son autre extrémité au moins un plateau de réception (6).

6. Dispositif selon la revendication 1 ou 2, **caractérisé en ce que** le mouvement de levage vertical de l'appareil de levage (5) est effectué par un guidage linéaire avec un entraînement motorisé et le moteur d'entraînement et au moins un dispositif de guidage pour au moins un plateau de réception (6), qui a par exemple la forme d'une colonne de guidage verticale, est monté sur la plaque de base (9) et un plateau de réception (6) est monté sur l'autre extrémité du guidage linéaire.

7. Dispositif selon la revendication 1 ou 2, **caractérisé en ce que** l'appareil de levage (5) dispose d'au moins un dispositif de guidage, qui a par exemple la forme d'une colonne de guidage verticale, et dont une extrémité est fixée par exemple sur la plaque de base (9) et dont l'autre extrémité, donc la douille de guidage, est fixée sur le plateau de réception (6).

8. Dispositif selon la revendication 1 ou 2, **caractérisé en ce que** le mouvement de levage vertical de l'appareil de levage (5) est effectué par au moins un aimant de levage, qui est monté à une extrémité sur la plaque de base (9) et dont l'autre extrémité porte au moins un plateau de réception (6).

9. Dispositif selon la revendication 1 ou 2, **caractérisé en ce que** le mouvement longitudinal horizontal du dispositif pour le déplacement longitudinal (10) est effectué par un guidage linéaire (11) avec un moteur d'entraînement (12) et des courroies d'entraînement continues (13) (par exemple des courroies crantées) ou par une chaîne d'entraînement, dans lequel le guidage linéaire (11) est assemblé par ses extrémités au cadre de maintien (1) et l'appareil de levage (5) est monté sur le guidage linéaire (11).

10. Dispositif selon la revendication 1 ou 2, **caractérisé en ce que** le mouvement longitudinal horizontal du dispositif pour le déplacement longitudinal (10) est effectué par au moins une colonne de guidage avec des sabots de guidage, dans lequel la colonne de guidage est assemblée par ses extrémités au cadre de maintien (1) et l'appareil de levage (5) est monté sur les sabots de guidage et le mouvement longitudinal horizontal de l'appareil de levage (5) est effectué par un moteur d'entraînement, qui est installé pour gagner de la place dans la région du dispositif pour le déplacement longitudinal (10) et dispose d'une courroie d'entraînement continue (13) (par exemple une courroie crantée) ou d'une chaîne d'entraînement, qui est en prise dans la région de l'appareil de levage (5) et peut déplacer celui-ci en direction horizontale des deux côtés par rapport à la position initiale.

11. Dispositif selon la revendication 1 ou 2, **caractérisé en ce que** le mouvement longitudinal horizontal du dispositif pour le déplacement longitudinal (10) est effectué par au moins une colonne de guidage avec des sabots de guidage, dans lequel la colonne de guidage est assemblée par ses extrémités au cadre de maintien et l'appareil de levage (5) est monté sur les sabots de guidage et le mouvement longitudinal horizontal de l'appareil de levage (5) est effectué par un cylindre pneumatique à double action, qui est installé pour gagner de la place dans la région du dispositif pour le déplacement longitudinal (10) et qui est en prise dans la région de l'appareil de levage (5) et peut déplacer celui-ci en direction horizontale des deux côtés par rapport à la position initiale.

12. Dispositif selon la revendication 1 ou 2, **caractérisé en ce que** le mouvement longitudinal horizontal du dispositif pour le déplacement longitudinal (10) est effectué par au moins une colonne de guidage avec des sabots de guidage, dans lequel la colonne de guidage est assemblée par ses extrémités au cadre de maintien et l'appareil de levage (5) est monté sur les sabots de guidage, et le mouvement longitudinal horizontal de l'appareil de levage (5) est effectué par la technique du levage magnétique, qui est installée pour gagner de la place dans la région du dispositif pour le déplacement longitudinal (10) et qui est en prise dans la région de l'appareil de levage (5) et peut déplacer celui-ci en direction horizontale des deux côtés par rapport à la position initiale.

13. Dispositif selon l'une quelconque des revendications 1 à 12, **caractérisé en ce que** les éléments de réception (7) pour la marchandise transportée sont constitués par des barres en forme de doigts, qui sont disposées en direction verticale sur le plateau de réception (6) et qui supportent ponctuellement la charge de la marchandise transportée, et **en ce qu'**un revêtement antibruit est déposé sur les éléments de réception (7) sur la face de contact avec la marchandise transportée, et qui empêche également le glissement de la marchandise transportée.

14. Dispositif selon l'une quelconque des revendications 1 à 13, **caractérisé en ce que** les éléments de réception (7) pour la marchandise transportée ont la forme de plaques, qui sont disposées en direction verticale sur le plateau de réception (6) et qui supportent selon des lignes la charge de la marchandise transportée et **en ce qu'**un revêtement antibruit est déposé sur les éléments de réception (7) sur la face de contact avec la marchandise transportée, et qui empêche également le glissement de la marchandise transportée.

15. Dispositif selon l'une quelconque des revendications 1 à 14, **caractérisé en ce que** le dispositif est construit par le système des modules (construction modulaire), de telle façon qu'il existe une compatibilité avec les différents convoyeurs existants et **en ce qu'**un aménagement ultérieur de convoyeurs existants est possible sans problème.

16. Dispositif selon l'une quelconque des revendications 1 à 15, **caractérisé en ce que** le dispositif peut, dans sa réalisation technique, être réalisé dans les matériaux les plus divers (par exemple acier, aluminium).

17. Dispositif selon la revendication 1, **caractérisé en ce que** le mouvement de levage vertical de l'appareil de levage (106) est effectué par au moins un cylindre pneumatique (105), qui est assemblé par une extrémité au châssis de base (101) et dont l'autre extrémité est solidement assemblée à un arbre (104) disposé sous un angle de 90° par rapport au mouvement de levage, dans lequel l'arbre (104) est supporté sur au moins un logement de palier (103), qui est solidement assemblé au dispositif pour le déplacement longitudinal (102), et il se trouve dans la région extérieure un guidage vertical (107), qui prend appui contre le châssis de base (101) et dont les faces les plus extérieures tournées vers les plaques latérales du châssis de base (101) sont polies radialement en direction verticale de telle façon qu'il ne puisse pas se produire de grippage lors du mouvement de levage.

18. Dispositif selon la revendication 1, **caractérisé en ce que** les entraînements des appareils de levage (106) et le dispositif pour le déplacement longitudinal (102) sont intégrés dans un profilé fermé, qui est disposé en direction longitudinale dans le dispositif, de façon à permettre un blindage étanche et **en ce que** les entraînements des appareils de levage (106) agissent sur des leviers, qui se trouvent hors du profilé fermé et qui peuvent être des articulations doubles ou triples, et **en ce que** ces leviers prennent appui sur le châssis de base (101), de telle façon que l'on puisse relever et abaisser dans le profilé fermé une unité composée des entraînements des appareils de levage (106) et du dispositif pour le déplacement longitudinal (102).

19. Dispositif selon les revendications 1 à 4, **caractérisé en ce que** l'entraînement de l'appareil de levage (106, 206) est pneumatique, électrique, électromagnétique ou hydraulique, et le guidage vertical est effectué par des dispositifs à leviers et/ou à articulations, des guidages linéaires, des colonnes de guidage avec des sabots de guidage ou autres dispositifs de guidage connus de l'état de la technique.

20. Dispositif selon la revendication 2, **caractérisé en ce que** les appareils de levage (206) sont fixés sur le chariot (202) et le chariot (202) est pourvu de roues de roulement (204) qui roulent dans la région du châssis (201) par exemple dans un profilé en U dressé qui fait partie du châssis (201), et **en ce que** des galets de guidage (211), qui sont également placés de façon réglable sur le chariot (202) guident le chariot longitudinalement dans le châssis (201), et **en ce que** le chariot (202) dispose d'un entraînement pneumatique, électrique, électromagnétique ou hydraulique, qui peut être installé à l'intérieur ou à l'extérieur du châssis (201), et **en ce que** la transmission des forces au chariot (202) est effectuée soit directement par l'unité d'entraînement soit par une courroie d'entraînement (210), qui peut être une courroie crantée, et **en ce que** cette courroie d'entraînement est disposée en continu dans le module et est assemblée de façon fixe mais réglable à un logement avec le chariot (202).

21. Dispositif selon la revendication 1 ou 2, **caractérisé en ce que** les éléments de réception (7) sont configurés sur leur côté supérieur de telle façon que des auxiliaires d'insertion soient installés sur l'arête gauche et droite des faces de réception en forme de lignes, de telle façon que la marchandise transportée à supporter puisse être centrée ou positionnée avec précision.

22. Dispositif selon la revendication 1 ou 2, **caractérisé en ce que** les éléments de réception (7) sont configurés sur leur côté supérieur de telle façon que des segments individuels des faces de réception en forme de lignes soient réalisés de telle façon qu'ils s'abaissent lors de la réception de la marchandise transportée et que la marchandise transportée soit ainsi fixée, de telle manière qu'un transfert de la marchandise transportée soit possible à des vitesses très élevées.

23. Dispositif selon la revendication 1 ou 2, **caractérisé en ce que** le mouvement de transfert est effectué de telle façon que l'on puisse opérer avec un comportement de démarrage et de freinage amorti, dans lequel ceci est permis par la conception des unités d'entraînement, par exemple par le franchissement de rampes et par la commande intégrée dans le module, et **en ce que** toute place désirée en direction longitudinale du module peut être atteinte exactement par des dispositifs techniques légers et par l'utilisation de systèmes de commande pas à pas.
